# EUROPÄISCHE PATENTSCHRIFT

(11) **EP 0 620 629 B1**
(45) Veröffentlichungstag und Bekanntmachung des Hinweises auf die Patenterteilung: **26.06.1996**
(21) Anmeldenummer: 93106139.4
(22) Anmeldetag: 15.04.1993
(51) Int. Cl.: H02H 3/02, G05B 19/05

(54) **Ausgabe-Treiberschaltung mit freischaltbarem Ausgang**
Output driver with switchable output
Circuit d'attaque de sortie avec sortie commutable

(43) Veröffentlichungstag der Anmeldung: 19.10.1994
(73) Patentinhaber: SIEMENS AKTIENGESELLSCHAFT, D-80333 München (DE)
(72) Erfinder: Mössner, Rudolf, Dipl.-Ing. (FH), W-8460 Schwandorf (DE); Wagner, Roman, Dipl.-Ing. (Univ.), W-8451 Kümmersbruck (DE)

(56) Entgegenhaltungen:
- WO-A-92/07402
- DE-A- 4 110 335

## Beschreibung

Die vorliegende Erfindung betrifft eine Ausgabe-Treiberschaltung, insbesondere eine Analog-Ausgabe-Treiberschaltung, der über eine Eingabeleitung ein Eingangssignal zuführbar ist, die über eine Ausgabeleitung ein mit dem Eingangssignal korrespondierendes Ausgangssignal liefert, die über zwei Versorgungsleitungen an zwei Versorgungspotentiale, z. B. +15 V und -15 V, anschließbar ist, wobei der Ausgabeleitung ein Ausgangsschaltelement mit zwei Schaltanschlüssen zugeordnet ist, dem über eine Steuerleitung ein Schaltsignal zum Freischalten der Ausgabeleitung zuführbar ist.

Derartige Treiberschaltungen werden in speicherprogrammierbaren Steuerungen verwendet. Als Schaltelement wird im Stand der Technik ein Relais verwendet. Das Relais dient dem sicheren Schalten des Ausgangs auf Nullpotential bei Spannungseinbrüchen. Relais haben jedoch eine Reihe von Nachteilen. Zum einen weisen sie relativ hohe Anschaffungskosten auf. Ferner besitzen sie eine relativ geringe Lebensdauer. Darüber hinaus sind Relais wegen der zum sicheren Schalten benötigten Luftstrecken nicht miniaturisierbar und verursachen im Normalbetrieb der Ausgabe-Treiberschaltung Signalverfälschungen.

Die Aufgabe der vorliegenden Erfindung besteht folglich darin, eine Ausgabe-Treiberschaltung zu schaffen, die obige Nachteile vermeidet.

Die Aufgabe wird dadurch gelöst,
- daß das Ausgangsschaltelement als elektronisches, ansteuerungsfrei völlig durchschaltendes Ausgangsschaltelement ausgebildet ist und
- daß das elektronische Ausgangsschaltelement mit seinem einen Schaltanschluß mit der Ausgabeleitung und mit seinem anderen Schaltanschluß mit einem Bezugspotential, z.B. Masse, verbunden ist.

Wenn den Versorgungsleitungen mindestens ein elektronisches, ansteuerungsfrei ein definiertes Schaltverhalten aufweisendes Versorgungsschaltelement zugeordnet ist, dem über eine Steuerleitung ein Schaltsignal zum Freischalten der Ausgabe-Treiberschaltung zuführbar ist, ist die Versorgungsspannung von der Treiberspannung abkoppelbar, so daß ein Belasten des elektronischen Ausgangsschaltelements bei einem Ansprechen des elektronischen Ausgangsschaltelements vermieden werden kann.

Vorzugsweise ist dabei jeder Versorgungsleitung ein derartiges Versorgungsschaltelement ausschließlich zugeordnet.

Wenn die elektronischen Versorgungsschaltelemente in den Versorgungsleitungen angeordnet sind und ansteuerungsfrei sperren, werden bei einem Spannungseinbruch auch die elektronischen Versorgungsschaltelemente nicht belastet.

Das elektronische Ausgangsschaltelement ist vorzugsweise als selbstleitender Feldeffekttransistor ausgebildet. In analoger Weise sind die elektronischen Versorgungsschaltelemente als selbstsperrende Feldeffekttransistoren ausgebildet.

Vorzugsweise werden mehrere Ausgabe-Treiberschaltungen gemaß Anspruch 7 über gemeinsame Versorgungsleitungen mit Energie versorgt. Dadurch werden die Versorgungsschaltelemente nämlich nur einmal für mehrere Ausgabe-Treiberschaltungen benötigt. Die Kosten der Schaltung können dadurch noch weiter gesenkt werden.

Weitere Vorteile und Einzelheiten ergeben sich aus der nachfolgenden Beschreibung eines Ausführungsbeispiels, anhand der Zeichnung sowie in Verbindung mit weiteren Unteransprüchen. Dabei zeigt:

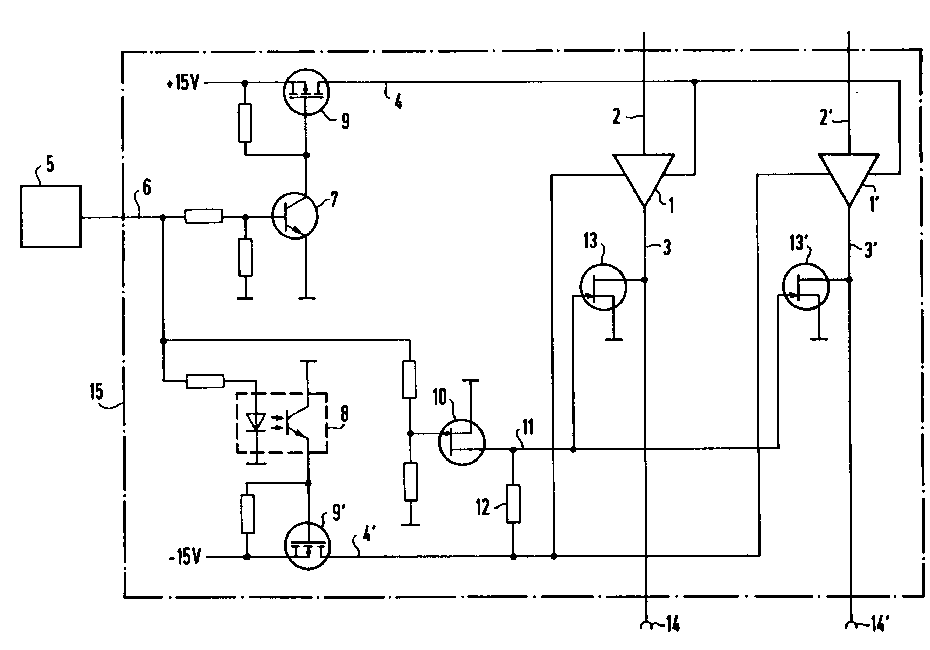

FIG 1 ein Schaltbild erfindungsgemäßer Ausgabe-Treiberschaltungen.

Gemäß FIG 1 werden den Ausgabe-Treiberschaltungen 1, 1' über die Eingabeleitungen 2, 2' analoge Eingangssignale zugeführt. Über die Ausgabeleitungen 3, 3' liefern die Treiberschaltungen 1, 1' im Normalbetrieb mit den Eingangssignalen korrespondierende analoge Ausgangssignale. Die Treiberschaltungen 1, 1' sind im Normalbetrieb über die Versorgungsleitungen 4, 4' an die Versorgungspotentiale +15 V und -15 V angeschlossen.

Hierzu wird von der Überwachungseinheit 5 im Normalbetrieb ein Spannungssignal von +5 V über die Steuerleitung 6 ausgegeben. Aufgrund des positiven Spannungssignals schalten der Transistor 7 und der Optokoppler 8 durch. Dadurch werden auch die selbstsperrenden Feldeffekttransistoren 9, 9' durchgeschalten, die hier als Versorgungsschaltelemente verwendet werden. Die Treiberschaltungen 1, 1' werden somit mit Energie versorgt.

Der Source-Eingang des Feldeffekttransistors 10 ist direkt mit Masse verbunden. Da ferner aufgrund des positiven Spannungssignals der Steuerleitung 6 auch am Steuereingang des selbstleitenden Feldeffekttransistors 10 eine positive Spannung anliegt, wird der Transistor 10 gesperrt. Als Ausgangsschaltelemente werden selbstleitende Feldeffekttransistoren 13, 13' verwendet. Da die Steuerleitung 11 über den Widerstand 12 mit -15 V verbunden ist, wird den Steuereingängen der selbstleitenden Feldeffekttransistoren 13, 13' ein negatives Spannungssignal zugeführt. Die selbstleitenden Feldeffekttransistoren 13, 13' sperren daher ebenfalls. Die an den Klemmen 14, 14' abgreifbaren Signale korrespondieren daher mit den an den Eingangsleitungen 2, 2' anstehenden Eingangssignalen.

Wenn die Versorgungsspannung der in FIG 1 dargestellten Schaltung zusammenbricht oder aus anderen Gründen ein Freischalten der Klemmen 14, 14' gewünscht ist, gibt die Überwachungseinheit 5 auf der Steuerleitung 6 ein Signal von 0 V aus. Der Transistor 7 und der Optokoppler sperren daher. Folglich sperren auch die selbstsperrenden Feldeffekttransistoren 9, 9'. Die Treiberschaltungen 1, 1' sind dadurch von ihren Versorgungspotentialen abgekoppelt bzw. freigeschaltet.

Weiterhin wird der Feldeffekttransistor 10 leitend. Die Spannung, die über die Steuerleitung 11 an die Steuereingänge der selbstleitenden Feldeffekttransistoren 13, 13' überragen wird, steigt daher ebenfalls auf 0 V an. Die selbstleitenden Feldeffekttransistoren 13, 13' werden daher leitend. Folglich werden die Klemmen 14, 14' von den Treiberschaltungen 1, 1' freigeschaltet bzw. mit Masse kurzgeschlossen. In analoger Weise schalten die Feldeffekttransistoren 13, 13' auch durch, wenn die Überwachungseinheit 5 überhaupt kein Signal liefert.

Aufgrund der Tatsache, daß die Spannungsversorgung der Treiberschaltungen 1, 1' unterbrochen wurde, werden die Transistoren 13, 13' nicht belastet. Ebenso werden die Transistoren 9, 9' nicht belastet, da sie sperren und folglich nur einen extrem kleinen Strom führen.

Die obenstehend beschrieben Schaltung ist selbstverständlich nicht nur für eine oder zwei Treiberschaltungen einsetzbar, sondern auch für mehrere Treiberschaltungen, z. B. 8 oder 16 Treiberschaltungen. Weil für die obenstehend beschriebene Schaltung ausnahmslos elektronische Elemente benötigt werden, ist die Schaltung auch in einen integrierten Schaltkreis 15 integrierbar.

Besonders vorteilhaft wird die obenstehend beschriebene Schaltung bei speicherprogrammierbaren Steuerungen eingesetzt, z. B. bei Analog-Ausgabeeinheiten oder gemischten Analog-Eingabe-/Ausgabeeinheiten

Anstelle von selbstleitenden Feldeffekttransistoren 13, 13' könnten auch selbstsperrende Feldeffekttransistoren eingesetzt werden, die in die Ausgabeleitungen 3, 3' geschalten werden. Dies würde jedoch im Normalbetrieb der Treiberschaltungen 1, 1' zu Signalverfälschungen führen. Ebenso könnten die Versorgungsschaltelemente 9, 9' auch als selbstleitende Feldeffekttransistoren ausgebildet sein, welche die Versorgungspotentiale untereinander oder mit Masse verbinden. Dies würde jedoch bei einem Freischalten der Treiberschaltungen 1, 1' zu einer hohen thermischen Belastung der Versorgungsschaltelemente führen. In analoger Weise würde ein Weglassen der Versorgungsschaltelemente zu einer thermischen Belastung der Ausgangsschaltelemente 13, 13' führen.

## Patentansprüche

1. Ausgabe-Treiberschaltung (1,1'), insbesondere Analog-Ausgabe-Treiberschaltung,
- der über eine Eingabeleitung (2,2') ein Eingangssignal zuführbar ist,
- die über eine Ausgabeleitung (3,3') ein mit dem Eingangssignal korrespondierendes Ausgangssignal liefert,
- die über zwei Versorgungsleitungen (4,4') an zwei Versorgungspotentiale, z. B. +15 V und -15 V, anschließbar ist,
- wobei der Ausgabeleitung (3,3') ein Ausgangsschaltelement (13,13') mit zwei Schaltanschlüssen zugeordnet ist, dem über eine Steuerleitung (11) ein Schaltsignal zum Freischalten der Ausgabeleitung (3,3') zuführbar ist,
**dadurch gekennzeichnet,**
- daß das Ausgangsschaltelement (13,13') als elektronisches, ansteuerungsfrei völlig durchschaltendes Ausgangsschaltelement (13,13') ausgebildet ist und
- daß das elektronische Ausgangsschaltelement (13,13') mit seinem einen Schaltanschluß mit der Ausgabeleitung (3,3') und mit seinem anderen Schaltanschluß mit einem Bezugspotential, z.B. Masse, verbunden ist.

2. Ausgabe-Treiberschaltung nach Anspruch 1, **dadurch gekennzeichnet,** daß das elektronische Ausgangsschaltelement (13,13') als selbstleitender Feldeffekttransistor (13,13') ausgebildet ist.

3. Ausgabe-Treiberschaltung nach Anspruch 1 oder 2, **dadurch gekennzeichnet,** daß den Versorgungsleitungen (4,4') mindestens ein elektronisches, ansteuerungsfrei ein definiertes Schaltverhalten aufweisendes Versorgungsschaltelement (9, 9') zugeordnet ist, dem über eine Steuerleitung (6) ein Schaltsignal zum Freischalten der Ausgabe-Treiberschaltung (1,1') zuführbar ist.

4. Ausgabe-Treiberschaltung nach Anspruch 3, **dadurch gekennzeichnet,** daß jeder Versorgungsleitung (4,4') ein elektronisches, ansteuerungsfrei ein definiertes Schaltverhalten aufweisendes Versorgungsschaltelement (9,9') ausschließlich zugeordnet ist.

5. Ausgabe-Treiberschaltung nach Anspruch 4, **dadurch gekennzeichnet,** daß die elektronischen Versorgungsschaltelemente (9,9') in den Versorgungsleitungen (4,4') angeordnet sind und ansteuerungsfrei sperren.

6. Ausgabe-Treiberschaltung nach Anspruch 5, **dadurch gekennzeichnet,** daß die elektronischen Versorgungsschaltelemente (9,9') als selbstsperrende Feldeffekttransistoren (9,9') ausgebildet sind.

7. Ausgabe-Treiberschaltung nach Anspruch 4,5 oder 6, **dadurch gekennzeichnet,** daß sie mit mindestens einer weiteren Ausgabe-Treiberschaltung (1,1') nach einem der Ansprüche 4 bis 6 zusammengefaßt ist und daß die beiden Ausgabe-Treiberschaltungen (1,1') gemeinsame Versorgungsleitungen (4,4') aufweisen.

8. Ausgabe-Treiberschaltung nach einem der Ansprüche 1 bis 7, **dadurch gekennzeichnet,** daß sie in einen integrierten Schaltkreis (15) integriert ist.

9. Ausgabe-Treiberschaltung nach einem der Ansprüche 1 bis 8, **dadurch gekennzeichnet,** daß sie in einer Analog-Ausgabe-Schaltung für speicherprogrammierbare Steuerungen verwendet wird.

## Claims

1. Output driver circuit (1, 1')_{,} in particular an analog output driver circuit,
- to which an input signal can be supplied by way of an input line (2, 2'),
- which supplies by way of an output line (3, 3') an output signal corresponding with the input signal,
- which can be connected by way of two supply lines (4, 4') to two supply potentials, for example +15 V and -15 V,
- wherein there is associated with the output line (3, 3') an output switching element (13, 13') with two switching connections, to which output switching element a switching signal can be supplied by way of a control line (11) to isolate the output line (3, 3'),
characterized in that
- the output switching element (13, 13') is an electronic output switching element (13, 13') which switches through completely when no control signal is supplied to it, and
- the electronic output switching element (13, 13') is connected by its one switching connection to the output line (3, 3') and by its other switching connection to a reference potential, for example earth.

2. Output driver circuit according to claim 1, characterized in that the electronic output switching element (13, 13') is a self-conducting field-effect transistor (13, 13').

3. Output driver circuit according to claim 1 or 2, characterized in that there is associated with the supply lines (4, 4') at least one electronic supply switching element (9, 9') having a defined switching behaviour when no control signal is supplied to it, to which supply switching element a switching signal can be supplied by way of a control line (6) to isolate the output driver circuit (1, 1').

4. Output driver circuit according to claim 3, characterized in that with each supply line (4, 4') there is exclusively associated an electronic supply switching element (9, 9') having a defined switching behaviour when no control signal is supplied to it.

5. Output driver circuit according to claim 4, characterized in that the electronic supply switching elements (9, 9') are arranged in the supply lines (4, 4') and block when no control signal is supplied to them.

6. Output driver circuit according to claim 5, characterized in that the electronic supply switching elements (9, 9') are self-blocking field-effect transistors (9, 9').

7. Output driver circuit according to claim 4, 5 or 6, characterized in that it is combined with at least one further output driver circuit (1, 1') according to one of claims 4 to 6 and in that the two output driver circuits (1, 1') have common supply lines (4, 4').

8. Output driver circuit according to one of claims 1 to 7, characterized in that it is integrated into an integrated circuit (15).

9. Output driver circuit according to one of claims 1 to 8, characterized in that it is used in an analog output circuit for memory-programmable controls.

## Revendications

1. Circuit d'attaque de sortie, notamment circuit d'attaque de sortie analogique,
- auquel peut être envoyé par l'intermédiaire d'un conducteur (2, 2') d'introduction un signal d'entrée,
- qui fournit par l'intermédiaire d'un conducteur (3, 3') de sortie un signal de sortie correspondant au signal d'entrée,
- qui peut être connecté par l'intermédiaire de deux conducteurs (4, 4') d'alimentation à deux potentiels d'alimentation, par exemple à + 15 V et à - 15 V,
- un élément (13, 13') d'interruption de sortie, qui comporte deux bornes d'interruption et auquel peut être envoyé par l'intermédiaire d'un conducteur (11) de commande un signal d'interruption pour la libération du conducteur (3, 3') de sortie, est associé au conducteur (3, 3') de sortie,
caractérisé en ce que
- l'élément (13, 13') d'interruption de sortie est sous la forme d'un élément (13, 13') d'interruption de sortie conduisant entièrement sans commande et
- l'élément (13, 13') électronique d'interruption de sortie est relié par une de ses bornes d'interruption au conducteur (3, 3') de sortie et par son autre borne d'interruption à un potentiel de référence, par exemple à la masse.

2. Circuit d'attaque de sortie suivant la revendication 1, caractérisé en ce que l'élément (13, 13') électronique d'interruption de sortie est sous la forme d'un transistor (13, 13') à effet de champ auto-conducteur.

3. Circuit d'attaque de sortie suivant la revendication 1 ou 2,
caractérisé en ce qu'il est associé aux conducteurs (4, 4') d'alimentation au moins un élément (9, 9') électronique d'interruption d'alimentation, qui a un comportement défini d'interruption sans commande et auquel peut être envoyé par l'intermédiaire d'un conducteur (6) de commande un signal d'interruption pour la libération du circuit (1, 1') d'attaque de sortie.

4. Circuit d'attaque de sortie suivant la revendication 3, caractérisé en ce qu'un élément (9, 9') électronique d'interruption d'alimentation ayant un comportement défini d'interruption sans commande est associé exclusivement à chaque conducteur (4, 4') d'alimentation.

5. Circuit d'attaque de sortie suivant la revendication 4, caractérisé en ce que les éléments (9, 9') électroniques d'interruption d'alimentation sont disposés dans les conducteurs (4, 4') d'alimentation et bloquent sans commande.

6. Circuit d'attaque de sortie suivant la revendication 5, caractérisé en ce que les éléments (9, 9') électroniques d'interruption d'alimentation sont sous la forme de transistors (9, 9') à effet de champ autobloquant.

7. Circuit d'attaque de sortie suivant la revendication 4, 5 ou 6, caractérisé en ce qu'il est réuni avec au moins un autre circuit (1, 1') d'attaque de sortie suivant l'une des revendications 4 à 6 et les deux circuits (1, 1') d'attaque de sortie comportent des conducteurs (4, 4') communs d'alimentation.

8. Circuit d'attaque de sortie suivant l'une des revendications 1 à 7, caractérisé en ce qu'il est intégré à un circuit intégré (15).

9. Circuit d'attaque de sortie suivant l'une des revendications 1 à 8, caractérisé en ce qu'il est utilisé dans un circuit de sortie analogique pour automates programmables industriels.
